# EUROPÄISCHE PATENTSCHRIFT

(11) **EP 4 083 110 B1**
(45) Veröffentlichungstag und Bekanntmachung des Hinweises auf die Patenterteilung: **25.02.2026**
(21) Anmeldenummer: 22169154.6
(22) Anmeldetag: 21.04.2022
(51) Int. Cl.: C08G 77/04, C08J 11/28

(54) **VERFAHREN ZUR HERSTELLUNG ENDVERSCHLOSSENER, FLÜSSIGER SILOXANE AUS SILIKONABFÄLLEN**
METHOD FOR THE PRODUCTION OF TERMINATED, LIQUID SILOXANES FROM SILICONE WASTE
PROCÉDÉ DE PRODUCTION DE SILOXANES LIQUIDES À EXTRÉMITÉ FERMÉE À PARTIR DES DÉCHETS DE SILICONE

(30) Priorität: 29.04.2021 EP 21171175
(43) Veröffentlichungstag der Anmeldung: 02.11.2022
(73) Patentinhaber: Evonik Operations GmbH, 45128 Essen (DE)
(72) Erfinder: Knott, Wilfried, 45355 Essen (DE); Dudzik, Horst, 45326 Essen (DE)
(74) Vertreter: Evonik Patent Association

(56) Entgegenhaltungen:
- EP-A1- 3 744 774

## Beschreibung

Die Erfindung liegt auf dem Gebiet der Silikone, insbesondere betrifft sie ein Verfahren zur Herstellung endverschlossener, flüssiger Siloxane wie z.B. Alkoxysiloxane, Wasserstoffsiloxane, Chlorsiloxane, Polydimethylsiloxane oder Vinylsiloxane aus Silikonabfällen, insbesondere umfassend Silikonelastomere und/oder Silikonkautschuk, durch deren säurekatalysierte Depolymerisation in einem lösemittelfreien Reaktionssystem.

Im Zusammenhang mit dieser Erfindung wird auch von der M-, D-, T-, Q-Bezeichnung für Organopolysiloxan-Baueinheiten Gebrauch gemacht. Als Referenz zu deren Bedeutung sei auf W. Noll, Chemie und Technologie der Silicone, Verlag Chemie, Weinheim Bergstr.,1960, S. 2 ff hingewiesen.

Silikonteile erfüllen aufgrund ihrer speziellen Materialcharakteristik besondere Anforderungen in medizinischer, pharmazeutischer und lebensmitteltechnischer Hinsicht. Sie sind bei entsprechender Verarbeitung physiologisch völlig inert. So findet man Produkte aus Silikon in Lebensmittelanwendungen, in der Medizin und in pharmazeutischen Bereichen. Babysauger und Schnuller werden ebenso aus Silikon hergestellt wie Taucherbrillen. In technischen Industrieanwendungen taucht Silikon vielfach als Werkstoff für Dichtungen auf oder in dynamischen Anwendungen für Membranen. Im Automobilbereich wird es für Schläuche, Ummantelungen oder als Kabelisolierung eingesetzt.

Bezüglich seiner mechanischen Eigenschaften hat Silikon gegenüber anderen Kautschuktypen einen entscheidenden Vorteil: Sie bleiben bei Silikon über einen sehr großen Temperaturbereich auf relativ stabilem Niveau erhalten, wohingegen sich die mechanischen Eigenschaften vieler anderer Werkstoffe bei Kälte oder Hitze stark verschlechtern. Ist z.B. ein EPDM-Werkstoff hinsichtlich seiner mechanischen Eigenschaften beim Blick auf das technische Datenblatt einer Silikon-Mischung überlegen, weil hier die Eigenschaften bei Raumtemperatur angegeben sind, so zeigt sich bei hohen oder niedrigen Temperaturen das komplett gegenteilige Bild. Die Temperaturbeständigkeit in Luft liegt bei Silikon dabei in etwa bei -80°C bis ca. 250°C. Diese Eigenschaft wird gerne für Dichtungen verwendet, da hierbei der für Silikon typische, sehr niedrige Druckverformungsrest zum Tragen kommt.

Aufgrund ihrer exzellenten Ozon-, UV- und Witterungsbeständigkeit werden Mischungen aus Silikon zudem häufig in Außenanwendungen eingesetzt. Darüber hinaus ist Silikon sehr schwer entflammbar und sowohl gut elektrisch isolierfähig wie auch gut elektrisch leitfähig. Chemisch beständig ist Silikon z. B. gegenüber Pflanzen- und Tierfetten, heißem Wasser und Alkohol. Die Beständigkeit ist eingeschränkt gegenüber Säuren, Laugen, Kraftstoffen und Ketonen sowie Wasserdampf. Silikon hat zudem eine sehr hohe Gasdurchlässigkeit.

Neben industriellen Anwendungen wird Silikon seit Jahrzehnten als bevorzugtes Elastomer im medizinischen Bereich gewählt. Komponenten aus Silikon werden dabei auch als Kurz- (für weniger als 30 Tage in Medizinprodukten der Klasse IIa) oder Langzeitimplantate (für 30 Tage oder mehr in Medizinprodukten der Klasse IIb verwendet) und erfüllen dort kritische Funktionen in Geräten wie Herzkathetern, Herzschrittmachern, Beatmungsgeräten, Neurostimulatoren oder Defibrillatoren.

Silikonkautschuk, der für Langzeitimplantate eingesetzt werden soll, wird weltweit nur von sehr wenigen Produzenten angeboten (z. B. von NuSil Technology). Die Herstellung der Mischungen erfolgt dabei unter strengen Auflagen der U.S. Food and Drug Administration (FDA). Auch bei der Verarbeitung muss auf besondere Reinheit geachtet werden und eine Komponentenproduktion im Reinraum stattfinden.

Ein wichtiger Vorteil von Silikon ist dabei, dass er biokompatibel ist und somit eine gute Verträglichkeit für den Menschen aufweist. Die Biokompatibilität einer Silikonmischung wird häufig durch USP Class VI-Einstufungen nachgewiesen (USP steht für United States Pharmacopeia) oder durch Tests gemäß der strengeren (DIN EN) ISO 10993 Richtlinie. Die (DIN EN) ISO 10993 dient dabei vor allen Dingen dem Testen von Medizinprodukten, die für lange Zeit oder permanent im menschlichen Körper implantiert werden. Für kürzere Anwendungen ist die Einstufung nach USP Class VI oder ggf. eine niedrigere Einstufung ausreichend.

Darüber hinaus bietet Silikon aufgrund seiner Eigenschaft, in einem weiten Temperaturbereich von etwa -80°C bis ca. 250°C eingesetzt werden zu können, die Möglichkeit zur Dampfsterilisation (Erhitzen im Autoklaven). Produkte aus Silikon können so von lebenden Mikroorganismen, deren Dauerformen, Viren etc. befreit werden. Auch die guten elektrischen Isolationsfähigkeiten von Silikon sind im medizinischen Bereich von besonderer Bedeutung.

Durch Variation der eingesetzten Silikonkautschuke und der Vernetzungsarten können Silikone besondere Eigenschaften erhalten. So sind HTV-Silikonkautschuke in einem breiten Temperaturbereich von -50°C bis zu 200°C, teilweise bis zu 300 C flexibel und beständig. Sie finden sich in Dichtungen der Automobil- oder Lebensmittelindustrie, in Kabelummantelungen oder als Dämpfungsmaterial.

RTV-Silikonkautschuke werden vor allem aufgrund ihrer Wärmeleitfähigkeit und elektrischen Isolierfähigkeit geschätzt, weshalb sie vorzugsweise im Elektro- und Elektronikbereich eingesetzt werden.

Flüssig-Silikone (auch LSR, liquid silicone rubber) haben gegenüber den HTV- und RTV-Silikonkautschuken eine niedrigere Viskosität. Sie können im Spritzgussverfahren in unterschiedlichste Formen gebracht werden und z.B. zu Silikonschläuchen verarbeitet werden. Da LSR-Silikone immer platinvernetzt hergestellt werden, können Produkte auf der Basis von Flüssigsilikonen in medizintechnischen Bereichen eingesetzt werden.

Dank seiner hohen Stabilität innerhalb des menschlichen Körpers stellt Silikon somit einen sehr guten Schutz kritischer Komponenten dar und wird aufgrund der genannten Eigenschaften zudem bevorzugt für funktionale Teile eingesetzt.

Grundsätzlich liegt der Unterschied von Silikonkautschuk im Vergleich zu anderen organischen Elastomeren darin, dass seine Hauptketten, die eine anorganische Struktur aufweisen, nicht aus Kohlenstoffverbindungen bestehen, sondern aus Kombinationen von Silizium- und Sauerstoffatomen gebildet wird, wobei als Füllstoff vor allem pyrogene Kieselsäure zur Ausbildung guter Eigenschaften verwendet wird.

Entsprechend ihrer Aggregatszustände sowie ihrer Vulkanisationstemperaturen lassen sich Silikonkautschuke in drei Gruppen gliedern:
Als HTV (high temperature vulcanizing) oder HCR (high consistency rubber) bezeichnet man Silikonkautschuke, deren Rohmaterial fest ist. Sie werden bei hohen Temperaturen üblicherweise zwischen 140°C und 200°C vulkanisiert. Die Vernetzung erfolgt durch Peroxide oder durch Additionsreaktion, wobei Platinverbindungen als Katalysator eingesetzt werden.

Flüssigsilikon oder LSR (Liquid Silikon Rubber) ist als Rohmaterial (zäh-)flüssig und besteht aus zwei Komponenten, die direkt vor der Verarbeitung gemischt werden. Die Vernetzung erfolgt durch Additionsreaktion bei ähnlichen Temperaturen wie bei den HTV-Typen, wobei die Vernetzung generell wesentlich schneller erfolgt.

Beide Silikon-Typen können eingefärbt werden. Fertige Elastomer-Artikel aus HTV-Silikon und LSR-Silikon unterscheiden sich in ihren Eigenschaften kaum.

Die dritte Gruppe sind sogenannte RTV-Silikone (room temperature vulcanizing). Bei diesen geschieht die Vernetzung bereits bei Raumtemperatur. Sie werden gerne als Kleb- und/oder Dichtungsmasse oder in der Prototypenfertigung verwendet. Verfügbar sind sie sowohl aus Ein- wie auch als Zweikomponentensysteme.

So vorteilhaft die aus der besonderen chemischen Stabilität der Silikone ableitbaren Gebrauchseigenschaften für die Nutzungsdauer der daraus gefertigten Gegenstände sind, so belastend ist deren Stabilität bei der Entsorgung der Silikone am Ende ihres Life-Cycles (End-of-Life-Silikone bzw. Silikonabfälle). Die Begriffe Silikonabfälle und End-of-Life-Silikone werden im Sinne dieser Erfindung synonym verwendet.

Laine et al. beschreiben in ACS Omega 2019, 4, 3782-3789 die Anstrengungen, die bislang unternommen wurden, um Silikone der Kreislaufwirtschaft zu zuführen. In diesem Artikel (Seite 3783, links oben, Zeilen 1 bis 4) heißt, es, dass sich das chemische Recycling von Silikonen auf die Depolymerisation von Silikonflüssigkeiten und quervernetzten Silikonkautschuken gerichtet hat mit dem Ziel, hieraus Monomere zu gewinnen, die anschließend wieder unter Ersatz neuen Materials (re)polymerisiert werden können. Den hierzu relevanten Stand der Technik würdigend, gelangen die Autoren zu dem Schluss, das bis heute keine technische Lösung für ein echtes Recycling zur Verfügung steht und konstatieren, dass ein Verfahren attraktiv wäre was bei geringen Energie- /Kosten-Einsatz nahezu quantitative Ausbeuten bei fast vollständigem Erhalt der ursprünglichen Eigenschaften gestattet. Umso mehr wäre ein geschlossener Kreislaufprozess attraktiv, bei dem das recycelte Silikon sogar der ursprünglichen Anwendung zugeführt wird. Downcycling insbesondere auch bei Silikonharzen, das heißt, das Akzeptieren des Wertverlustes bei zurückgewonnenem Material, der sich aus dessen beschränktem Wiedereinsatz für minderwertige Produkte geringerer Qualität ergibt, ist die heute gelebte Industriepraxis. Laine et al. widmen sich der Herstellung eines speziellen Copolymers aus Dodecaphenylsilsesquioxan und Octamethylcyclotetrasiloxan in Tetrahydrofuran durch Einwirkung von Tetrabutylammoniumfluorid mit anschließender thermischer Härtung und zeigen, dass man dieses Material auch wieder durch die Einwirkung von Tetrabutylammoniumfluorid in THF aufbrechen kann.

Ebenfalls den heutigen Stand der Technik der Siloxan-Depolymerisation in Richtung Recycling und Wiederverwendung beleuchtend und dabei speziell auf die Besonderheit des von Laine et al. gewählten Silikoncopolymers abstellend, setzen sich J. C. Furgal und B. Rupasinghe in ihrem Artikel "Full Circle Recycling of Polysiloxanes via Room-Temperature Fluoride-Catalyzed Depolymerization to Repolymerizable Cyclics", ACS Appl. Polymer Materials, 10.03.2021 (https://dx.doi.org/10.2021/asapm.0c011406) review-artig mit der breiten technischen Herausforderung des Silikonrecyclings auseinander und wenden die bei Laine beschriebene Tetrabutylammoniumfluorid-Katalyse bei kommerziellen Silikonen an. Erhalten werden bei diesen Depolymerisationen auch stets zyklische Produkte (4-, 5-, 6-gliedrige Ringe).

In der EP 3744774 A1 wird ebenfalls ausführlich dargelegt, dass die im bisherig bekannten Stand der Technik beschriebenen Versuche und Arbeiten zum Recycling von Silikonabfällen nur mangelhafte Ergebnisse zeitigen. Da es an einer technisch gangbaren und attraktiven Route, sowohl Silikonöle als auch feste Silikone stofflich zu recyclen, mangelte, wurde in dieser Schrift ein Verfahren für das Recycling von Silikonen durch deren chemische Transformation in Acetoxygruppen aufweisende Siloxane und/oder Silane vorgeschlagen, wobei man die zu recycelnden Silikone einer Wärmebehandlung in Aufschlusssystemen, umfassend Essigsäureanhydrid und/oder Acetoxysiloxan, sowie zumindest eine Brönstedtsäure, vorzugsweise unter Zusatz von Essigsäure unterzieht.

Die noch nicht veröffentlichte europäische Patentanmeldung mit der Anmeldenummer 20202477.4 beschreibt ein Upcycling-Verfahren zur Herstellung von sauren, endäquilibrierten Acetoxygruppen tragenden Siloxanen mit Kettenlängen größer 3 Siliziumatomen aus End-of-Life-Silikonen, insbesondere umfassend Silikon-Kleb- und/oder -Dichtstoffe und/oder Silikonkautschuk- und/oder Silikonöl-Abfälle, durch thermischen Aufschluss der End-of-Life-Silikone in einem sauren Reaktionsmedium, umfassend Essigsäureanhydrid, Essigsäure sowie zumindest eine weitere Brönstedtsäure mit einem pKa-Wert < 4, wobei der Aufschluss in einem Reaktor erfolgt, dessen Volumen mindestens 1 Liter beträgt. Die hierbei gewonnenen, endäquilibrierten Acetoxygruppen tragenden Siloxane mit Kettenlängen größer 3 Siliziumatome können unmittelbar als Ausgangsmaterial für die Synthese neuer hochwertiger Silikonprodukte insbesondere für die Herstellung grenzflächenaktiver Substanzen genutzt werden.

So fortschrittsgreifend die Lehren gerade der beiden letztgenannten Schriften auf die mit ihnen erzielbare Wertsteigerung bzw. Werterhaltung des wiederzuverwertenden Silikonmaterials sind, so bleibt die im Upcyclat bzw. Recyclat gewonnene Funktionalität auf die Si-Acetoxy-Funktion beschränkt und es bedarf, wie die EP 3744774 A1 ausführt, ergänzender Syntheseschritte wie zum Beispiel der Umwandlung der Acetoxyfunktion in eine OH-Gruppe oder der Umwandlung der Acetoxyfunktion in eine Alkoxygruppe, um zu weiteren Si-gebundenen Funktionalitäten zu gelangen.

Mit anderen Worten ist in Sicht dieses Standes der Technik die Universalität der Wiederverwertungsverfahren dahingehend zu verbessern, dass man ausgehend von Silikonabfällen in nur einem Schritt und das bei eher geringem Energie- und Kosteneinsatz zu endverschlossenen Siloxanen gelangt, bei denen das terminale Siliziumatom des Recyclats insbesondere die Alkoxyfunktion, die Wasserstofffunktion, die Chlorfunktion, die Methyl - oder die Vinylfunktion trägt.

Überraschenderweise wurde nun gefunden, dass die Herstellung endverschlossener Siloxane aus Silikonabfällen, bevorzugt aus Silikon-Kleb- und/oder -Dichtstoffen, sowie aus Silikonkautschuk, durch deren säurekatalysierte Depolymerisation in Alkoxysiloxane, Wasserstoffsiloxane, Chlorsiloxane, Polydimethylsiloxane und/oder Vinylsiloxane gelingt.

Gegenstand der Erfindung ist ein Verfahren zur Herstellung endverschlossener flüssiger Siloxane mit Kettenlängen größer 3 Siliziumatomen aus Silikonabfällen, insbesondere umfassend Silikonelastomere und/ oder Silikonkautschuken durch deren säurekatalysierte Depolymerisation in einem lösemittelfreien Reaktionssystem, welches umfasst
mindestens eine Endgruppen M^{R} liefernde Verbindung,
sowie mindestens eine D-Einheiten liefernde Verbindung,
sowie mindestens eine Brönstedtsäure.

Unter Endgruppen M^{R} liefernde Verbindung wird im Rahmen dieser Erfindung insbesondere eine mindestens 1 Siliziumatom aufweisende, siliziumorganische Verbindung verstanden, die bei Anwendung des erfindungsgemäßen Verfahrens eine oder zwei Methylgruppen und/oder ein oder zwei Chloratome und/oder ein oder zwei Wasserstoffatome und/oder eine oder zwei Vinylgruppen und/oder eine oder zwei Alkoxygruppen, hierbei bevorzugt eine oder zwei Ethoxygruppen und/oder eine oder zwei Methoxygruppen zur terminalen Absättigung, das heißt, zur bindungsmäßigen Absättigung der a- und w-Position des angestrebten, endverschlossenen flüssigen Siloxans beiträgt. "Endverschlossen" im Sinne dieser Erfindung bedeutet demnach, dass die erfindungsgemäß resultierenden flüssigen Siloxane mit Kettenlängen > 3 Siliziumatomen in ihren α,ω-Positionen mit Methylgruppen und/oder Chloratomen und/oder Wasserstoffatomen und/oder Vinylgruppen und/oder Alkoxygruppen, hierbei insbesondere Ethoxygruppen und/oder Methoxygruppen, substituiert sind. Erfindungsgemäß ausgeschlossen sind dabei insbesondere alle Acetoxygruppen liefernden chemischen Verbindungen.

Flüssige Siloxane sind solche, die unter Normbedingungen (T = 25°C, p= 1013 hPa) flüssig sind.

Gemäß der Erfindung umfasst die Endgruppen M^{R} liefernde Verbindung Hexamethyldisiloxan, Polydimethylsiloxane, Poly(methyl-hydrogen)siloxan, Poly(methylhydrogen)polydimethylsiloxan-Copolymer, Trimethylchlorsilan, Dimethyldichlorsilan, Dichlorotetramethyldisiloxan, α,ω-Dichloro-polydimethylsiloxan, Monoa-Ikoxytrimethyl-silan, hierbei insbesondere Monomethoxytrimethylsilan oder Monoethoxytrimethylsilan, Dialkoxydimethylsilan hierbei insbesondere Dimethoxydimethylsilan oder Diethoxy-dimethylsilan, α,ω-Dialkoxypolydimethylsiloxane hierbei insbesondere α,ω-Dimethoxypolydimethylsiloxane oder α,ω-Diethoxypolydimethylsiloxane Tetramethyl-disiloxan, α,ω-Dihydrogenpolydimethylsiloxane, Divinyltetramethyldisiloxan oder α,ω-Divinylpolydimethylsiloxane, oder auch Mischungen vorgenannter Verbindungen.

Gemäß einer bevorzugten Ausführungsform der Erfindung umfasst die D-Einheiten liefernde Verbindung insbesondere mindestens ein Cyclosiloxan ausgewählt aus Hexamethylcyclotrisiloxan, Octamethylcyclotetrasiloxan, Decamethylcyclopentasiloxan und/oder Dodecamethylcylohexasiloxan und/oder ein bei den Endgruppen M^{R} liefernden Verbindungen genanntes, D-Gruppen enthaltendes Siloxan; insbesondere ist die D-Einheiten liefernde Verbindung aus einer oder mehreren der vorgenannten Verbindungen ausgewählt.

Die erfindungsgemäße säurekatalysierte, lösemittelfreie Depolymerisation wird vorzugsweise im Temperaturbereich von 30°C bis 150°C, bevorzugt im Temperaturbereich von 45°C bis 130°C und, im Falle der zersetzungslabilen α,ω-Dihydrogenpolydimethylsiloxane, besonders bevorzugt im Temperaturbereich von 35°C bis 80° durchgeführt.

Für den Fachmann überraschend verläuft die erfindungsgemäße Depolymerisation von Silikonabfällen zu endverschlossenen Siloxanen recht zügig unter milden Temperaturbedingungen, was verblüffender Weise in nur einem Schritt selbst den synthetischen Zugang zu den empfindlichen α,ω-Dihydrogenpolydimethylsiloxanen ohne SiH-Verlust ermöglicht (siehe erfindungsgemäßes Beispiel 3).

Das erfindungsgemäße Verfahren wird vorzugsweise über einen Zeitraum von 1 Stunde bis 10 Stunden, bevorzugt von 2 Stunden bis 8 Stunden, besonders bevorzugt von 3 bis 6 Stunden durchgeführt.

Die erfindungsgemäß eingesetzte Brönstedtsäure ist vorzugsweise ausgewählt aus Protonensäuren mit einem pK_{A}-Wert kleiner - 1,30, wie vorzugsweise Salpetersäure, Methansulfonsäure und/oder p-Toluolsulfonsäure, vorzugsweise Protonensäuren mit einem pK_{A}-Wert kleiner - 2,90 wie vorzugsweise konzentrierte Schwefelsäure, besonders bevorzugt Protonensäuren mit einem pK_{A}-Wert kleiner - 4,90 wie vorzugsweise die Perfluoralkansulfonsäuren wie Heptafluorpropansulfonsäure, Pentafluorethansulfonsäure, Trifluormethansulfonsäure, Perchlorsäure und/oder Chlorsulfonsäure, wobei insbesondere Perfluoralkansulfonsäuren präferiert werden, und wobei Trifluormethansulfonsäure ganz besonders bevorzugt ist, und/oder vorzugsweise sulfonsauren oder perfluoralkylsulfonsauren Ionenaustauscherharzen.

Die erfindungsgemäß eingesetzte Brönstedtsäure wird vorzugsweise in Mengen von 0,05 bis 3 Gewichtsprozent, bevorzugt von 0,1 bis 1,0 Gewichtsprozent, besonders bevorzugt von 0,2 bis 0,8 Gewichtsprozent bezogen auf den gesamten Silikon-Anteil des Reaktionssystems eingesetzt.

Das erfindungsgemäße Verfahren kann sowohl an flüssig-viskosen als auch an partiell oder gänzlich durchgehärteten Silikonabfällen durchgeführt werden.

In einer bevorzugten Ausführungsform der Erfindung ist im Falle insbesondere gänzlich durchgehärteter Silikonabfälle deren Zerkleinerung in stückiges Gut vorgesehen, das am Ende der Zerkleinerung bevorzugt Durchmesser von 1 bis 10 mm, insbesondere von 3 bis 6 mm aufweist.

Zur Erreichung dieser Zielgeometrie kann man den Silikonabfall vorteilhafterweise zunächst durch Kontakt zum Beispiel mit flüssigem Stickstoff oder auch Trockeneispellets kaltverspröden, das heißt, in seiner Elastizität deutlich absenken und dann geeignet zerkleinern.

Erfindungsgemäß bevorzugt kann die optionale Zerkleinerung des kaltversprödeten Materials zum Beispiel mit Hilfe eines Brechers, eines Schredders, einer Mühle, eines Hammerwerks, mit Hilfe von Walzen oder einem Knetwerk oder auch mit Hilfe schneidender Maschinen erfolgen.

Für den Fachmann einsichtig, wird das erfindungsgemäße Verfahren zur Erzielung einer effektiven Durchmischung des Reaktionssystems bei der säurekatalysierten, lösemittelfreien Depolymerisation vorzugsweise in Reaktoren vorgenommen, die über entsprechende Rührorgane und/ oder auch scherende Einbauten verfügen.

Gemäß einer bevorzugten Ausführungsform der Erfindung betrifft das erfindungsgemäße Verfahren ein Verfahren zum Re- bzw. Upcycling von Silikonabfällen, insbesondere von Silikon-Kleb- und/oder -Dichtstoffen, Silikonkautschuk-Abfällen. Gemäß einer weiteren bevorzugten Ausführungsform der Erfindung weisen die zu verwertenden Silikone Molmassen > 236 g/ mol auf.

Gemäß einer besonders bevorzugten Ausführungsform der Erfindung zeichnet sich das erfindungsgemäße Verfahren dadurch aus, dass die Silikonabfälle Silikon-Kleb- und/oder Silikon-Dichtstoffe umfassen, vorzugsweise Silikon-Kleb- und/oder Silikon-Dichtstoff-Kartuschen betreffen, insbesondere Silikon-Kleb- und/oder Silikon-Dichtstoff-Reste in und/oder an Polyolefin-Behältnissen, vorzugsweise PE-Behältnissen, bevorzugt umfassend HDPE und/oder LDPE, betreffen. Übliche Silikon-Kleb- und/oder Silikon-Dichtstoff-Kartuschen umfassen eine Silikon-Kleb- und/oder Silikon-Dichtstoffmasse in einem Polyolefin-Behältnis, vorzugsweise Polyethylen-Behältnis (PE-Behältnis), welches ein Herausdrücken der Silikon-Kleb- und/oder Silikon-Dichtstoffmasse ermöglicht, wobei der Behältnis-Mantel gewöhnlich aus HDPE (High Density Polyethylene) und die halbtransparenten Behältnis-Teile (Kolben und Ausdrückspitze) gewöhnlich aus LDPE (Low Density Polyethylene) gefertigt sind. HDPE und LDPE sind dem Fachmann bekannt. HDPE weist eine hohe Dichte zwischen 0,94 g/cm³ und 0,97 g/cm³ auf; LDPE weist demgegenüber eine geringere Dichte zwischen 0,915 g/cm³ und 0,935 g/cm³ auf.

Das erfindungsgemäße Verfahren ermöglicht somit als weiteren erheblichen Vorteil auch noch die im Wesentlichen sortenreine Rückführung von Polyolefin, vorzugsweise Polyethylen, insbesondere High Density Polyethylene (HDPE), welches aus vorzugsweise gebrauchten Silikon-Kleb- und Silikon -Dichtstoffkartuschen stammt. Es ermöglicht ganz allgemein die Verwertung Silikon-kontaminierter Polyolefin-Abfälle, vorzugsweise PE-Abfälle, unter Bereitstellung saurer, Alkoxysiloxane, Wasserstoffsiloxane, Chlorsiloxane, Polydimethylsiloxane und/oder Vinylsiloxane mit Kettenlängen größer 3 Siliziumatomen unter im Wesentlichen sortenreiner Rückgewinnung von Polyolefin, vorzugsweise Polyethylen.

Wie bedeutend und groß das spezielle Problem einer Silikonkontamination in HDPE-Abfällen ist, geht unter anderem aus einer Studie von Ketenakkoord Kunststofkringloop en Afvalfonds Verpakkingen "Kitkokers in een circulaire economie", Autoren I. Gort und S. Haffmans vom 01.05.2017 hervor (erhältlich vom Kennisinstituut Duurzaam Verpakken, Zuid Hollandlaan 7, 2596 AL Den Haag, Niederlande, oder deren Internetauftritt unter https://kidv.nl/ und zwar https://kidv.nl/media/rapportages/kitkokers_in_een_circulaire_economy.pdf?1.1.2-rc.1) die verdeutlicht, welche dramatischen Effekte kleine Silikonverunreinigungen auf die Wiederverwendbarkeit aus Abfall gewonnenen Re-Granulats haben. So wandern Silikonanteile selbst durch die feinen, 150-µm--Schmelzsiebe eines Granulat erzeugenden Extruders hindurch und gelangen dabei ins Re-Granulat und verursachen letztlich Produktionsfehler beim Kunststoffverarbeiter der beispielsweise Kunststoffschläuche blasextrudiert. Man konstatiert, dass bereits ein Silikonkörnchen Oberflächendefekte und Löcher im Polymer hervorrufen kann, so dass hierdurch gegebenenfalls eine komplette, stundenwährende Produktionscharge unbrauchbar wird. Das kontaminierte HDPE ist von minderwertiger Qualität und kann somit auch nur noch für unkritische Zwecke verwendet werden.

Akzeptabel sind diese silikonkontaminierten Kartuschenrecyclate derzeit nur bei der Verarbeitung zu groben Objekten wie Dämmwänden, Gerüstbohlen, Begrenzungspfosten, Eisenbahnschwellen und Picknicktischen, bei denen die Präsenz von Silikonteilchen weniger auffällt, da man hierbei nicht zwingend eine glatte Oberfläche erwartet. In die stoffliche Wiederverwertung der Silikonkomponente setzt bezeichnete Studie allerdings keine Hoffnung.

Die Silikonreste insbesondere gebrauchter und somit teilentleerter Silikondichtstoffkartuschen kleben und das noch abhängig vom Stadium des Durchhärtungsprozesses üblicherweise hartnäckig an der sie umgebenden Kartuschenwandung sowie an dem Ausdrückkolben und an der Ausdrückspitze der Kartusche fest und lassen sich nicht einfach und schon gar nicht in Gänze von dem überwiegend eingesetzten HDPE abtrennen. Nach Angaben der Studie bestehen grundsätzlich alle Teile einer Dichtstoffkartusche aus Polyethylen, wobei der Mantel aus HDPE und die halbtransparenten Teile (Kolben und Ausdrückspitze) oft aus LDPE (Low Density Polyethylene) gefertigt sind.

Erfindungsgemäß wurde nun überraschenderweise festgestellt, dass man die in der Kartusche verbliebenen durchgehärteten Silikonreste vollständig von Polyolefin, vorzugsweise HDPE und LDPE, lösen kann, indem man die vorzugsweise zerkleinerte, z.B. in kleine Stücke zerschnittene Dichtstoffkartusche einem Aufschluss in einem sauren Reaktionsmedium, umfassend mindestens eine Endgruppen M^{R} liefernde Verbindung, sowie mindestens eine D-Einheiten liefernde Verbindung sowie mindestens eine Brönstedtsäure, unterzieht.

Hierbei lösen sich die Silikonreste vollständig vom Trägermaterial ab, welches dann durch Filtration und gegebenenfalls noch Waschung(en) und Trocknung als nahezu sortenreines, silikonfreies Polyolefin, vorzugweise HDPE bzw. LDPE, gewonnen wird.

Das hierbei abgelöste Silikon wird vorzugsweise in ein saures Alkoxysiloxan oder Wasserstoffsiloxan, Chlorsiloxan, Polydimethylsiloxan oder Vinylsiloxan mit einer Kettenlänge größer 3 Siliziumatomen transformiert.

Somit eröffnet der erfindungsgemäß aufgefundene Weg zusätzlich die technische Möglichkeit, neben sortenreinem Polyolefin, vorzugsweise HDPE, auch noch im Sinne eines Upcyclings aus minderwertigen, problematischen Silikonabfällen hochwertige Reaktivsiloxane zu gewinnen, die zu wertvollen, grenzflächenaktiven Additiven verarbeitet werden können.

End-of-Life-Silikondichtstoffkartuschen können mit ihren Silikonanhaftungen vorteilhafterweise zunächst durch Kontakt zum Beispiel mit flüssigem Stickstoff oder auch Trockeneispellets kaltversprödet, das heißt, in ihrer Elastizität deutlich abgesenkt und dann geeignet zerkleinert werden. Die Zerkleinerung kaltversprödeter Silikondichtstoffkartuschen kann zum Beispiel mit Hilfe eines Brechers, eines Schredders, einer Mühle, eines Hammerwerks, mit Hilfe von Walzen oder einem Knetwerk oder auch mit Hilfe schneidender Maschinen erfolgen. Am Ende der Zerkleinerung besitzt das kleinstückige, silikonbehaftete Kartuschenmaterial bevorzugt Kantenlängen von 1 bis 10 mm, insbesondere von 3 bis 6 mm. Erfindungsgemäß bevorzugt kann man das zerkleinerte Material sofort einer säurekatalysierten Depolymerisation in einem Stoffsystem umfassend mindestens eine Endgruppen M^{R} liefernde Verbindung, sowie mindestens eine D-Einheiten liefernde Verbindung sowie mindestens eine Brönstedtsäure, unterziehen.

Weniger bevorzugt, kann man jedoch auch zum Beispiel in Anlehnung an die Lehre der WO 2008/097306 A1 das kleinstückige, silikonbehaftete Kartuschenmaterial zunächst einer Vortrennung unterwerfen, indem man dieses in eine Flüssigkeit einbringt, deren Dichte zwischen der des Silikons und des Kartuschenkunststoffs liegt und somit zu einer Dichteseparation von Kartuschenmaterial und Silikonanteilen führt (entspricht der Bildung dichteseparierter Schichten).

Die Grenzen dieser Art von Vorseparation werden unter anderem in der Studie von Ketenakkoord Kunststofkringloop en Afvalfonds Verpakkingen (s.o., S. 22 und 34) aufgezeigt. So sinkt die Trennschärfe in der Dichteseparation zum Beispiel durch okkludierte Lufteinschlüsse im Silikon, die Auftrieb verursachen und dazu führen, dass mehr oder minder große Anteile an Silikon auch wieder in der Kunststoffschicht landen.

Vorzugsweise wird die säurekatalysierte Depolymerisation in einem Reaktor von mindestens einem Liter Volumen durchgeführt. Der aggressiven Natur des erfindungsgemäßen Reaktionsmediums Rechnung tragend, wird das Reaktormaterial vorzugsweise aus Glas oder Keramik, bevorzugt aus Metall, vorzugsweise hochlegierten Edelstählen, besonders bevorzugt aus Hastelloy ausgewählt.

Der Reaktor selbst sollte - sofern nicht elektrisch beheizt- vorzugsweise über einen Heizmantel verfügen, der die Ankoppelung an einen geeigneten Wärmeträgerkreislauf (zum Beispiel auf Basis von Wärmeträgeröl- oder Heißdampf) gestattet.

Vorzugsweise wird das kleinstückige, silikonbehaftete Kartuschenmaterial im Sinne intensiver Kontaktierung und erleichterter Ablösung des Silikons von HDPE/ LDPE im sauren Reaktonsmedium durch die Nutzung eines effektiven Rührorgans bewegt.

Sollten im Silikondichtstoff Füllmaterialien enthalten sein, so werden diese ebenfalls durch die säurekatalysierte depolymerisierende An-, Ab- und Auflösung des Silikons vom HDPE bzw. LDPE frei. Am Ende des erfindungsgemäßen Aufschlusses lassen sich die kleinstückigen HDPE- bzw. LDPE-Teilchen zum Beispiel mit Hilfe eines groben Siebes vom flüssigen, Füllmaterial durchsetzten endverschlossenen Siloxans filtrierend abtrennen, das man darauf beispielsweise durch ein Absitzenlassen von dem festen, feinteiligen Füllstoff scheiden kann.

Erfindungsgemäß und ohne die vorgestellte Lehre zu schmälern, lassen sich zur vorteilhaften Ausgestaltung für die hier angesprochenen verfahrenstechnischen Basisoperationen naturgemäß auch noch weitere Lösungen finden, wie zum Beispiel ein Abfiltrieren oder ein Zentrifugalabscheiden des Füllstoffes vom endverschlossenen, flüssigen Siloxan.

Spuren an Silikon lassen sich von den kleinstückigen HDPE- bzw. LDPE-Teilchen durch geeignete Waschung, zum Beispiel durch das innige Kontaktieren mit Lösungsmitteln, Abtrennen derselben und anschließende Trocknung des/ der sorten reinen Polymer(en)s beseitigen.

Der Begriff der End-of-Life-Silikone bzw. Silikonabfälle umfasst im Rahmen der erfindungsgemäßen Lehre alle silikonbasierten oder Silikon-enthaltenden Produkte sowie Produkte mit Silikonanhaftungen bzw. Silikonverunreinigungen, die jeweils ihre technische Lebensdauer oder Haltbarkeit nahezu und/oder bereits vollständig erreicht haben oder aber aus einem anderen Grunde für die Entsorgung vorgesehen wären. Die Haltbarkeit oder Lebensdauer bezeichnet dabei die Zeit, die ein Material oder ein Gegenstand ohne den Austausch von Kernkomponenten oder komplettes Versagen genutzt werden kann. Hierzu zählen im Rahmen der Lehre auch diejenigen Silikon-Kleb- und Silikon-Dichtstoffe zum Beispiel in Kartuschen, deren Haltbarkeits- oder Verfalldatum beinahe erreicht und/ oder überschritten ist (bewertet nach dem zu erwartenden und/ oder bereits eingetretenen Stadium der Aushärtung), sowie zum Beispiel auch mehr oder minder alte Anguss- und/ oder Stanzabfälle aus der Silikonkautschuk-Produktion oder ebenfalls auch ausrangierter Elektronikschrott, der silikonversiegelte Bauteile/ Bauteilgruppen enthält. Der Begriff der End-of-Life- Silikone bzw. Silikonabfälle umfasst im Rahmen der erfindungsgemäßen Lehre außerdem alle Silikonabfälle, auch Produktionsabfälle. Er umfasst insbesondere all jene Silikone oder silikonhaltigen Teile oder Teile mit Silikonanhaftungen oder Silikonanschmutzungen, die ansonsten für die gewöhnliche Entsorgung vorgesehen sind und demgemäß als Abfall betrachtet werden. Er umfasst somit z.B. auch für die Entsorgung vorgesehene Silikon-Kleb- und/oder -Dichtstoff-Kartuschen, insbesondere gebrauchte Silikon-Kleb- und/oder -Dichtstoff-Kartuschen, in und an welchen noch Silikonreste kleben oder vorhanden sind. Wie weiter oben bereits angegeben, werden die Begriffe der "Silikonabfälle" und der "End-of-Life-Silikone" im Sinne dieser Erfindung synonym verstanden.

Der Begriff der "sauren Depolymerisation" umfasst im Sinne der vorliegenden Erfindung den Vorgang der Transformation der End-of-Life-Silikone in dem erfindungsgemäßen Reaktionssystem insbesondere in saure, Alkoxysiloxane, Wasserstoffsiloxane, Chlorsiloxane, Polydimethylsiloxane und/oder Vinylsiloxane mit Kettenlängen größer 3 Siliziumatomen vorzugsweise unter Zufuhr thermischer Energie, bevorzugt umfassend eine entsprechende Wärmebehandlung der Silikonabfälle bei Temperaturen von vorteilhafterweise 30°C bis 150°C, bevorzugt im Temperaturbereich von 45°C bis 130°C und im Falle der zersetzungslabilen α,ω-Dihydrogenpolydimethylsiloxane besonders bevorzugt im Temperaturbereich von 35°C bis 80°C.

Einige Schriften des Standes der Technik widmen sich der De-Silikonisierung von Bauteilen, die im Bereich von Elektronikteilen oder des ausrangierten Elektronikschrotts (JP H04 318075 A und US 6.652.665 B1) oder aber bei Kunstfasergeweben aus Polyamid oder Polyester speziell für Airbags (US 2010/0012623 A1 und EP 0950684 A2) anzusiedeln sind.

So lehrt die JP H04 318075 A die Ablösung ausgehärteter Silikonharze von harten, unempfindlichen Substraten bei Raumtemperatur wie zum Beispiel Glas-Epoxy-Trägern und keramischen Trägern mit Hilfe einer Mischung bestehend aus, aliphatischen Kohlenwasserstoffen, chlorierten aliphatischen Kohlenwasserstoffen und monozyklischen Aromaten, Aceton, Methylethylketon, Cyclohexanon, Essigsäure - n-Butylacetate oder einer Mischung bestehend aus den genannten Solventien oder Tetrahydrofuran mit Dodecylbenzolsulfonsäure, wobei der Solvensanteil im Bereich von 40 bis 90 Gewichtsprozent und der Anteil an Dodecylbenzolsulfonsäure im Bereich von 60 bis 10 Gewichtsprozent rangieren.

Die Lehre der US 6.652.665 B1 zielt auch auf die Entfernung von Silikonablagerungen von elektronischen Teilen und setzt als Waschlösung hierfür quaternäre Ammoniumfluoride in einem Hydroxylgruppen-freien, aprotischen Lösungsmittel ein.

Mignani stellt in der US 2010/0012623 A1 auf ein Delaminierverfahren für Gegenstände wie Airbags ab, bei dem das Silikon-beschichtete Substrat mit einer wässrigen Lösung eines Alkali- oder Erdalkalimetallhydroxids in Gegenwart eines Phasentransferkatalysators gegebenenfalls noch unter Wärmebehandlung durch Auflösen oder Suspendieren vom Silikon getrennt wird.

Auch auf das Nutzbarmachen des speziell in Airbagabfällen enthaltenen Wertstoffs Polyamid abstellend, beschäftigt sich die EP 0950684 A2 mit der Aufbereitung silikonharzhaltigen Polyamidmaterials durch Behandeln desselben mit Alkalihydroxid unter Erwärmung, Abtrennung des festen Materials von der Lösung und Neutralisation des festen Materials mit phosphoriger Säure.

Keines der genannten de-silikonisierenden Verfahren beschäftigt sich indes mit der wertstiftenden Transformation der zu entfernenden Silikonkomponente und dabei noch in Sonderheit mit der Bereitstellung hochwertiger endverschlossener Siloxane, die sich zum Beispiel direkt zur Herstellung grenzflächenaktiver Substanzen eignen.

Das erfindungsgemäß beanspruchte Verfahren trägt diesem Umstand Rechnung und gestattet neben der Rückgewinnung dieser als Wertstoff angesehenen Silikon tragenden Materialien auch noch das Upcycling des abgelösten Silikons vorzugsweise zu einem jeweils Brönstedtsauren Alkoxysiloxan, Wasserstoffsiloxan, Chlorsiloxan, Polydimethylsiloxan oder Vinylsiloxan mit Kettenlängen größer 3 Siliziumatomen die als Reaktivsiloxane für eine Vielzahl von Folgereaktionen bestens eingesetzt werden können.

Der Begriff des "Upcyclings" kennzeichnet somit im Sinne dieser Erfindung die Transformation von Silikonabfällen in höherwertige Produkte, es kommt also zu einer stofflichen Aufwertung; in Anlehnung an die Definition in I. Vollmer et al., Angew. Chem. Int. Ed. 2020, 59, 15402- 15423 kennzeichnet der Begriff des "Upcyclings" somit im Sinne dieser Erfindung vorzugsweise die Transformation des Silikonabfalls in Chemikalien, die einen höheren Marktwert als Monomere oder Pyrolyseöl haben.

Da der erfindungsgemäße Aufschluss unter moderaten Reaktionsbedingungen erfolgt, erleiden zum Beispiel derartig mit-recycliertes HDPE/ LDPE keinerlei Qualitätseinbuße.

Erfindungsgemäß wird die säurekatalysierte Depolymerisation der Silikonabfälle vorzugsweise im Temperaturbereich von 30 °C bis 150°C, bevorzugt im Temperaturbereich von 45°C bis 130°C und - im Falle der zersetzungslabilen α,ω-Dihydrogenpolydimethylsiloxane - besonders bevorzugt im Temperaturbereich von 35°C bis 80° durchgeführt.

Der erfindungsgemäße Aufschluss kann vorteilhafterweise bei Normaldruck (1013 hPa) oder in druckfesten Apparaturen unter Überdruck vorgenommen werden. Bevorzugt wird der erfindungsgemäße Aufschluss bei Normaldruck durchgeführt.

Erfindungsgemäß bevorzugt wird die Brönstedtsäure gemäß einer bevorzugten Ausführungsform der Erfindung in Mengen vorteilhafterweise von 0,1 bis 1,5 Massenprozent, bevorzugt in Mengen von 0,15 bis 1,0 Massenprozent, besonders bevorzugt in Mengen von 0,2 bis 0,8 Massenprozent bezogen auf den gesamten Silikon-Anteil des Reaktionssystems eingesetzt.

Mit Reaktionssystem ist das gesamte Stoffgemisch gemeint, dass der erfindungsgemäßen Depolymerisation unterworfen wird, also mindestens umfassend die zu verwertenden Silikonabfälle, insbesondere umfassend Silikonelastomere und/ oder Silikonkautschuke, sowie mindestens eine Endgruppen M^{R} liefernde Verbindung, sowie mindestens eine D-Einheiten liefernde Verbindung sowie mindestens eine Brönstedtsäure.

Das erfindungsgemäße Verfahren wird unter Ausschluss von Lösungsmitteln durchgeführt. Die Verwendung von Lösemitteln kann nämlich in ihrer geringsten Auswirkung zu einer Verringerung der Raum-Zeit-Ausbeute der endverschlossenen, flüssigen Siloxane wie Alkoxysiloxane, Wasserstoffsiloxane, Chlorsiloxane, Polydimethylsiloxane und/oder Vinylsiloxane führen und überdies die spätere Abtrennung des Lösemittels erfordern. Darüber hinaus und dann von der jeweiligen chemischen Natur des spezifischen Lösungsmittels abhängig - könnte dieses zu einer teilweisen oder vollständigen Inhibierung des erfindungsgemäßen Depolymerisationsverfahrens und/ oder zu unerwünschten Nebenreaktionen führen. Im Rahmen der Erfindung bedeutet "lösungsmittelfreies Reaktionssystem", dass der auf das Reaktionssystem bezogene Anteil an Lösungsmittel kleiner 2 Gewichtsprozent, bevorzugt kleiner 0,5 Gewichtsprozent, besonders bevorzugt kleiner 0,1 Gewichtsprozent, vorzugsweise kleiner 0,01 Gewichtsprozent beträgt.

Erfindungsgemäß werden unter Lösungsmittel organische Lösungsmittel wie Alkane, Cycloalkane, Aromaten, Alkylaromaten, Ether, Ester, Ketone, Carbonsäuren, Carbonsäureanhydride, Kohlensäurester, Alkohole und/oder Wasser verstanden.

Erfindungsgemäß umfasst der Begriff des Lösungsmittels nicht die Endgruppen M^{R} liefernde Verbindung und nicht die D-Einheiten liefernde Verbindung und nicht die erfindungsgemäß einzusetzende Brönstedtsäure.

Das nicht erfindungsgemäße Beispiel 7 verdeutlicht den oben angesprochenen Aspekt der Inhibierung, das heißt, dass keine säurekatalysierte Depolymerisation eines ausgehärteten Silikondichtstoffes in einem lösemittelhaltigen Reaktionssystem mit Isopropanol als gängigem Lösungsmittel stattfindet. Der eingesetzte, ausgehärtete Silikondichtstoff wird praktisch unverändert rückisoliert.

Mit Blick auf die erfindungsgemäß einzusetzende Brönstedtsäure entspricht es einer besonders bevorzugten Ausführungsform der Erfindung, wenn in dem erfindungsgemäßen Verfahren als Brönstedtsäuren Protonensäuren mit einem pKa-Wert kleiner - 1,30, wie vorzugsweise Salpetersäure, Methansulfonsäure und/oder p-Toluolsulfonsäure, vorzugsweise Protonensäuren mit einem pKa-Wert kleiner - 2,90 wie vorzugsweise konzentrierte Schwefelsäure, besonders bevorzugt Protonensäuren mit einem pKa-Wert kleiner - 4,90 wie vorzugsweise die Perfluoralkansulfonsäuren wie Heptafluorpropansulfonsäure, Pentafluorethansulfonsäure, Trifluormethansulfonsäure, Perchlorsäure und/oder Chlorsulfonsäure verwendet werden, wobei insbesondere Perfluoralkansulfonsäuren präferiert werden, und hierbei Trifluormethansulfonsäure ganz besonders bevorzugt ist, und/oder wobei vorzugsweise sulfonsaure oder perfluoralkylsulfonsaure Ionenaustauscherharze eingesetzt werden können.

Mit Silikon-Anteil ist im Sinne dieser Erfindung die Gesamtmasse an Silikon in dem Reaktionssystem gemeint.

Das erfindungsgemäß herstellbare Brönstedtsaure Chlorsiloxan bedarf, auch aufgrund des eigensauren Charakters, für seine Weiterverarbeitung und hier insbesondere zu SiOC-verknüpften Folgeprodukten, wie zum Besispiel SiOC-verknüpften Polyethersiloxanen, keinerlei Neutralisation. Die aus dem erfindungsgemäßen Verfahren im Chlorsiloxan vorhandene Brönstedtsäure stört bei der weiteren Verarbeitung im Regelfall nicht.

Demgegenüber können, sofern für deren Weiterverarbeitung gewünscht, die erfindungsgemäß herstellbaren Brönstedtsauren Alkoxysiloxane, Wasserstoffsiloxane, Polydimethylsiloxane oder Vinylsiloxane optional durch Eintrag einer festen, flüssigen oder gasförmigen Base neutralisiert werden.

Erfindungsgemäß bevorzugt kann als gasförmige Base Ammoniak in das optional zu neutralisierende Brönstedtsaure endverschlossene Siloxan eingeleitet werden.

Erfindungsgemäß optional einsetzbare feste und /oder flüssige Basen können vorzugsweise ein Hydrogencarbonat und/oder Carbonat der Alkali-/ oder Erdalkalimetalle, hierbei auch ggf. in Form eines Hydrats und/ oder eine organische Aminbase in Form eines primären oder sekundären Amins oder ein Acetatsalz umfassen, wobei man die optionale Behandlung des Siloxans mit einer festen und/oder flüssigen und/oder gasförmigen Base vorzugsweise im Temperaturbereich von 0°C bis 140°C, bevorzugt von 20°C bis 110°C und ganz besonders bevorzugt zwischen 30°C und 80°C durchführt.

Man bemisst die Menge der in das Siloxan optional einzubringenden Base vorzugsweise so, dass sie mindestens dem im Siloxan vorhandenen Säureäquivalent entspricht, bevorzugt der 2- bis 10-fachen Menge.

Eine ggf. gewünschte Abtrennung des bei der optionalen Neutralisation ausgefällten Salzes vom endverschlossenen Siloxan kann vorzugsweise durch Filtration erfolgen. Werden gefüllte Silikonabfälle, insbesondere umfassend gefüllte Silikonelastomere und/ oder gefüllte Silikonkautschuke durch die erfindungsgemäße säurekatalysierte Depolymerisation in endverschlossene Siloxane umgewandelt, so kann der hierbei freigesetzte Füllstoffanteil vorzugsweise gemeinsam mit dem ausgefällten Salz abgetrennt werden.

Gemäß einer weiteren, erfindungsgemäß bevorzugten Ausführungsform des Verfahrens trennt man das Brönstedtsaure endverschlossene Siloxan durch Filtration zunächst vom freigesetzten Füllstoffanteil ab und neutralisiert danach das so gewonnene Filtrat durch Eintrag einer festen, flüssigen oder gasförmigen Base.

Für den Fachmann einsichtig, empfiehlt sich vor der Verarbeitung von unbekannten Silikonabfällen deren repräsentative Beprobung mit anschließendem Testaufschluss im Labor- und/ oder Technikumsmaßstab, um so zu ermitteln, wie hoch der aktuelle Silikongehalt ist und auch mit welchem Zwangsanfall silikonfreier Anteile zu rechnen ist. Hier sind unter anderem Bindemittel, Kunststoffe und zum Beispiel im Falle des Elektronikschrotts Metalle, Keramik, etc. zu nennen.

Gemäß der Erfindung erfolgt die Umsetzung vorzugsweise in einem Reaktor, dessen Volumen bevorzugt mindestens 1 Liter beträgt, vorzugsweise aber mindestens 5 Liter, insbesondere mindestens 10 Liter beträgt, und vorzugsweise maximal 500000 Liter beträgt.

Der Begriff des Reaktors ist dem Fachmann an sich wohlbekannt und bedarf daher keiner gesonderten Erläuterung. Als Reaktor wird gewöhnlich und so auch vorzugsweise im Sinne dieser Erfindung ein abgegrenzter Raum, beispielsweise ein gerührter Behälter (z.B. ein Rührkessel) oder ein Rohr (z.B. Strömungsrohr als Durchflussreaktor) bezeichnet, in dem chemische Stoffumwandlungen gezielt durchgeführt werden können. Es können dies, wie der Fachmann weiß, offene oder geschlossene Behälter sein, in denen die Edukte in die gewünschten Produkte oder Zwischenprodukte umgewandelt werden. Das Volumen von Reaktoren wird vom Hersteller angegeben oder kann durch Auslitern bestimmt werden. Das Reaktormaterial kann vorzugsweise aus den dazu geeigneten Materialien, wie vorteilhafterweise Glas oder Keramik, bevorzugt aus Metall, insbesondere hochlegierten Edelstählen, besonders bevorzugt aus Hastelloy, ausgewählt werden. All dies ist dem Fachmann bekannt. Vorzugsweise verfügen geeignete Reaktoren über Vorrichtungen, die ein Mischen der Reaktionsmasse ermöglichen. Geeignete Rührmittel sind dem Fachmann bekannt und umfassen z.B. Dissolver, Propellerrührer, Ankerrührer, Balkenrührer, Magnetrührwerk, Becherrührer, Leitstrahlmischer oder Schrägblattrührer. Zur Heizung oder Kühlung der Reaktionsmasse kann auf alle bekannte Mittel, wie z.B. Doppelmantel, Vollrohrschlangen oder Halbrohrschlangen zurückgegriffen werden. Mit Blick auf die Betriebsarten kann im Wesentlichen zwischen einer kontinuierlichen und einer diskontinuierlichen Betriebsweise unterschieden werden. Vorzugsweise können für große Produktmengen kontinuierliche Prozesse eingesetzt werden, während bei eher kleinen Produktmengen vorzugsweise chargenweise gearbeitet wird. All dies weiß der Fachmann. Reaktoren, wie insbesondere Rührkessel, sind in vielfältiger Weise kommerziell erhältlich, beispielsweise bei der Behälter KG Bremen GmbH & Co, Theodor-Barth-Str. 25, 28307 Bremen, Deutschland, oder beispielsweise bei der Büchi AG, Gschwaderstrasse 12, 8610 Uster / Schweiz. Außerdem sei ergänzend noch auf das Buch "Chemiereaktoren: Grundlagen, Auslegung und Simulation (Deutsch), 19. April 2017, von Jens Hagen" verwiesen; ferner auf das Buch "Handbuch Chemische Reaktoren, Grundlagen und Anwendungen der Chemischen Reaktionstechnik, Herausgegeben von Reschetilowski, Wladimir, Verlag: Springer, Berlin; 1. Aufl. 2020"; ferner auf das Buch von Klaus Hertwig, Lothar Martens: Chemische Verfahrenstechnik: Berechnung, Auslegung und Betrieb chemischer Reaktoren, Oldenbourg, München 2007.

Ein weiterer Gegenstand der vorliegenden Erfindung sind endverschlossene, saure flüssige Siloxane mit Kettenlängen größer 3 Siliziumatomen, vorzugsweise Alkoxysiloxane, Wasserstoffsiloxane, Chlorsiloxane, Polydimethylsiloxane und/oder Vinylsiloxane, hergestellt nach einem erfindungsgemäßen Verfahren wie zuvor beschrieben.

Ein weiterer Gegenstand der vorliegenden Erfindung liegt in der Verwendung von sauren Siloxanen mit Kettenlängen größer 3 Siliziumatomen, vorzugsweise Alkoxysiloxane, Wasserstoffsiloxane oder Chlorsiloxane, hergestellt aus Silikonabfällen, insbesondere wie hier erfindungsgemäß dargelegt, zur Herstellung von Polyethersiloxanen, insbesondere für die Herstellung von Polyurethanschaumstabilisatoren, Entschäumern, Lack-, Verlaufs- und Dispergieradditiven und/oder Dismulgatoren. Entsprechende Polyethersiloxane sind beispielsweise erhältlich durch Umsetzung von Wasserstoffsiloxanen mit ungesättigten Polyetherolen (zum Beispiel Allylpolyethern) unter Einsatz von Edelmetallkatalysatoren (Hydrosilylierung) oder auch von Wasserstoffsiloxanen mit Polyetherolen unter katalytisch induzierter Wasserstoffreisetzung (dehydrogenative SiOC-Verknüpfung).

### Beispiele:

Die folgenden Beispiele dienen dem Fachmann allein zur Erläuterung dieser Erfindung und stellen keinerlei Beschränkung des beanspruchten Verfahrens dar. Die erfindungsgemäße Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCI₃ und gegen Tetramethylsilan (TMS) als externem Standard [δ(²⁹Si) = 0,0 ppm] gemessen.

Die Gaschromatogramme werden an einem GC-Gerät des Typs GC 7890B der Fa. Agilent Technologies ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.

### Beispiel 1 (erfindungsgemäß):

### Herstellung eines Polydimethylsiloxans aus Silikonfugenmasse

30 g eines auf einer Polyethylenfolie ausgebrachten und ausgehärteten Silikonfugenmassestranges (MEM^{®} Universal-Silikon (weiß)) werden in Form von 3-4 mm großen irregulären Stückchen in einem 500-ml-Vierhalsrundkolben ausgestattet mit KPG-Rührer und aufgesetztem Rückflusskühler zusammen mit 70 g Decamethylcyclopentasiloxan und 12,5 g Hexamethyldisiloxan unter langsamen Rühren vorgelegt und dann mit 0,69 g konzentrierter Schwefelsäure (0,6 Gewichtsprozent bezogen auf den Gesamtansatz) versetzt und für 4 Stunden unter weiterem Rühren auf 120°C erhitzt. Im Laufe der Reaktion verflüssigen sich die stückigen Bestandteile der Reaktionsmatrix sukzessive und man erhält eine nur noch von feinen Feststoffpartikeln durchsetzte, leichtviskose Flüssigkeit. Nach Filtration über eine Filterpresse (K 300 Filterscheibe) belegt ein ²⁹Si-NMR-Spektrum des klaren Filtrats, dass ein Trimethylsilyl-endverschlossenes Polydimethylsiloxan entstanden ist.

### Beispiel 2 (erfindungsgemäß):

### Herstellung eines a-Monochloropolydimethylsiloxans

30 g eines auf einer Polyethylenfolie ausgebrachten und ausgehärteten Silikonfugenmassestranges (Soudal Sanitär Dusche & Bad, transparent) werden in Form von 3-4 mm großen irregulären Stückchen in einem 500-ml-Vierhalsrundkolben ausgestattet mit KPG-Rührer und aufgesetztem Rückflusskühler zusammen mit 60g Decamethylcyclopentasiloxan und 10,0 g Trimethylchlorsilan unter langsamen Rühren vorgelegt und dann mit 0,20 g konzentrierter Trifluormethansulfonsäure (0,2 Gewichtsprozent bezogen auf den Gesamtansatz) versetzt und für 4 Stunden unter weiterem Rühren auf 50°C erwärmt.

Im Laufe der Reaktion verflüssigen sich die stückigen Bestandteile der Reaktionsmatrix sukzessive und man erhält eine nur noch von feinen Feststoffpartikeln durchsetzte, leichtviskose Flüssigkeit. Nach Filtration über eine Filterpresse (K 300 Filterscheibe) belegt ein ²⁹Si-NMR-Spektrum des klaren Filtrats, dass ein gemischtes Chloro-Trimethylsilyl-endverschlossenes Polydimethylsiloxan entstanden ist.

### Beispiel 3 (erfindungsgemäß):

### Herstellung eines α,ω-Dihydrogenpolydimethylsiloxans

30 g eines auf einer Polyethylenfolie ausgebrachten und ausgehärteten Silikonfugenmassestranges (Soudal Sanitär Dusche & Bad, transparent) werden in Form von 3-4 mm großen irregulären Stückchen in einem 500-ml-Vierhalsrundkolben ausgestattet mit KPG-Rührer und aufgesetztem Rückflusskühler zusammen mit 40,0 g Decamethylcyclopentasiloxan und 30,0 g eines α,ω-Dihydrogenpolydimethylsiloxans (SiH-Wert: 3,06 mol SiH/ kg bestimmt durch Gasvolumetrie (Zersetzung eines eingewogenen Aliquots mit Natriumbutylatlösung an einer Gasbürette) entsprechend einer mittleren Kettenlänge N = 9,3) unter langsamen Rühren vorgelegt und dann mit 0,20 g konzentrierter Trifluormethansulfonsäure (0,2 Gewichtsprozent bezogen auf den Gesamtansatz) versetzt und für 2 Stunden unter weiterem Rühren auf 50°C erwärmt.

Im Laufe der Reaktion verflüssigen sich die stückigen Bestandteile der Reaktionsmatrix sukzessive und man erhält eine nur noch von feinen Feststoffpartikeln durchsetzte, nach H₂S-riechende Flüssigkeit, die mit Hilfe einer Filterpresse (K 300 Filterscheibe) vom Feststoffanteil befreit wird. Dem erhaltenen klaren Filtrat weist das zugehörige ²⁹Si-NMR-Spektrum die Struktur eines α,ω-Dihydrogenpolydimethylsiloxans der mittleren Kettenlänge von N ca. 28,7 zu. Eine begleitend durchgeführte gasvolumetrische Bestimmung an einer eingewogenen Filtratprobe belegt, dass alles eingesetzte SiH erhalten bleibt.

### Beispiel 4 (erfindungsgemäß):

### Herstellung eines α,ω-Dichloropolydimethylsiloxans

30 g eines auf einer Polyethylenfolie ausgebrachten und ausgehärteten Silikonfugenmassestranges (Soudal Sanitär Dusche & Bad, transparent) werden in Form von 3-4 mm großen irregulären Stückchen in einem 500-ml-Vierhalsrundkolben ausgestattet mit KPG-Rührer und aufgesetztem Rückflusskühler zusammen mit 40,0 g Decamethylcyclopentasiloxan und 30,0 g eines α,ω-Di-chlorpolydimethylsiloxans (Säurewert: 4,32 mol / kg bestimmt durch acidimetrische Titration eines in H₂0/Aceton zersetzten Aliquots) entsprechend einer mittleren Kettenlänge N = 5,5) unter langsamen Rühren vorgelegt und dann mit 0,60 g konzentrierter Schwefelsäure (0,6 Gewichtsprozent bezogen auf den Gesamtansatz) versetzt und für 4 Stunden unter weiterem Rühren auf 120°C erhitzt.

Im Laufe der Reaktion verflüssigen sich die stückigen Bestandteile der Reaktionsmatrix sukzessive und man erhält eine lediglich noch von feinen Feststoffpartikeln durchsetzte Flüssigkeit, die nach Filtration über eine K 300 Filterscheibe in einer Filterpresse ein klares Filtrat liefert, dem das zugehörige ²⁹Si-NMR-Spektrum die Struktur eines α,ω-Dichloropolydimethylsiloxans der mittleren Kettenlänge von N ca. 38,3 zuweist.

### Beispiel 5 (erfindungsgemäß):

### Herstellung eines α,ω-Diethoxypolydimethylsiloxans

30 g eines auf einer Polyethylenfolie ausgebrachten und ausgehärteten Silikonfugenmassestranges (Soudal Sanitär Dusche & Bad, transparent) werden in Form von 3-4 mm großen irregulären Stückchen in einem 500-ml-Vierhalsrundkolben ausgestattet mit KPG-Rührer und aufgesetztem Rückflusskühler zusammen mit 70,0 g Decamethylcyclopentasiloxan und 12,5 g Diethoxydimethylsilan unter langsamen Rühren vorgelegt und dann mit 0,69 g konzentrierter Schwefelsäure (0,6 Gewichts-prozent bezogen auf den Gesamtansatz) versetzt und für 4 Stunden unter weiterem Rühren auf 120°C erhitzt.

Im Laufe der Reaktion verflüssigen sich die stückigen Bestandteile der Reaktionsmatrix sukzessive und man erhält eine von feinen Feststoffpartikeln durchsetzte Flüssigkeit, die nach Filtration über eine K 300 Filterscheibe in einer Filterpresse ein klares Filtrat liefert, dessen zugehöriges ²⁹Si-NMR-Spektrum die Struktur eines α,ω-Diethoxypolydimethylsiloxans der mittleren Kettenlänge von N =ca. 20,7 belegt.

### Beispiel 6 (erfindungsgemäß):

### Herstellung eines α,ω-Diethoxypolydimethylsiloxans

30 g eines auf einer Polyethylenfolie ausgebrachten und ausgehärteten Silikonfugenmassestranges (MEM^{®} Universal-Silikon (weiß)) werden in Form von 3-4 mm großen irregulären Stückchen in einem 500-ml-Vierhalsrundkolben ausgestattet mit KPG-Rührer und aufgesetztem Rückflusskühler zusammen mit 70,0 g Decamethylcyclopentasiloxan und 12,5 g Diethoxydimethylsilan unter langsamen Rühren vorgelegt und dann mit 0,69 g konzentrierter Schwefelsäure (0,6 Gewichts-prozent bezogen auf den Gesamtansatz) versetzt und für 4 Stunden unter weiterem Rühren auf 120°C erhitzt.

Im Laufe der Reaktion verflüssigen sich die stückigen Bestandteile der Reaktionsmatrix sukzessive und man erhält eine nur noch von feinen Feststoffpartikeln durchsetzte Flüssigkeit. Nach Filtration über eine K 300 Filterscheibe in einer Filterpresse wird ein klares Filtrat erhalten, dessen zugehöriges ²⁹Si-NMR-Spektrum die Struktur eines α,ω-Diethoxypolydimethylsiloxans der mittleren Kettenlänge von N ca. 22,8 belegt. Mit etwa 0,1 Molprozent vertreten sieht man bei einer chemischen Verschiebung von ca. - 67 ppm auch ein sehr kleines Signal, das auf die Präsenz von T-Gruppen hindeutet.

### Beispiel 7 (nicht erfindungsgemäß):

### Versuch der Herstellung eines α,ω-Dihydrogenpolydimethylsiloxans

30 g eines auf einer Polyethylenfolie ausgebrachten und ausgehärteten Silikonfugenmassestranges (Hellweg Basic Silikon, transparent) werden in Form von 3-4 mm großen irregulären Stückchen in einem 500-ml-Vierhalsrundkolben ausgestattet mit KPG-Rührer und aufgesetztem Rückflusskühler zusammen mit 70,0 g Isopropanol und 12,5 g eines α,ω-Dihydrogenpolydimethylsiloxans (SiH-Wert: 3,06 mol SiH/ kg bestimmt durch Gasvolumetrie (Zersetzung eines eingewogenen Aliquots mit Natriumbutylatlösung an einer Gasbürette) entsprechend einer mittleren Kettenlänge N = 9,3) unter langsamen Rühren vorgelegt und dann mit 0,20 g konzentrierter Trifluormethansulfonsäure (0,2 Gewichtsprozent bezogen auf den Gesamtansatz) versetzt und zunächst für 2 Stunden bei 22°C und dann für 4 Stunden unter weiterem Rühren auf 50°C erwärmt.

Die stückigen Bestandteile des Kolbeninhalts erfahren während dieser Behandlung keinerlei sichtbare Veränderung. Man isoliert nach Erkalten der Gesamtmasse einen Kolbeninhalt, bei dem eine transparent-farblose Flüssigphase die visuell unveränderten Silikonstückchen bedeckt.

### Beispiel 8 (erfindungsgemäß):

### Herstellung eines Polydimethylsiloxans aus Silikonfugenmasse

30 g eines auf einer Polyethylenfolie ausgebrachten und ausgehärteten Silikonfugenmassestranges (Hellweg Basic Silikon, transparent) werden in Form von 3-4 mm großen irregulären Stückchen in einem 500-ml-Vierhalsrundkolben ausgestattet mit KPG-Rührer und aufgesetztem Rückflusskühler zusammen mit 70 g Decamethylcyclopentasiloxan und 12,5 g Hexamethyldisiloxan unter langsamen Rühren vorgelegt und dann mit 0,69 g Methansulfonsäure (0,6 Gewichtsprozent bezogen auf den Gesamtansatz) versetzt und für 4 Stunden unter weiterem Rühren auf 120°C erhitzt.

Im Laufe der Reaktion verflüssigen sich die stückigen Bestandteile der Reaktionsmatrix sukzessive und man erhält eine nur noch von feinen Feststoffpartikeln durchsetzte, leichtviskose Flüssigkeit. Nach Filtration über eine Filterpresse (K 300 Filterscheibe) belegt ein ²⁹Si-NMR-Spektrum des klaren Filtrats, dass ein Trimethylsilyl-endverschlossenes Polydimethylsiloxan entstanden ist.

## Patentansprüche

1. Verfahren zur Herstellung endverschlossener, flüssiger Siloxane mit Kettenlängen größer 3 Siliziumatomen aus Silikonabfällen, insbesondere umfassend Silikonelastomere und/oder Silikonkautschuke, durch deren säurekatalysierte Depolymerisation in einem lösemittelfreien Reaktionssystem, welches umfasst
(i) mindestens eine Endgruppen M^{R} liefernde Verbindung,
(ii) mindestens eine D-Einheiten liefernde Verbindung
sowie
(iii) mindestens eine Brönstedtsäure,
wobei die Endgruppen M^{R} liefernde Verbindung Hexamethyldisiloxan, Polydimethylsiloxane, Poly(methylhydrogen)siloxan, Poly(methylhydrogen)polydimethylsiloxan-Copolymer, Trimethylchlorsilan, Dimethyldichlorsilan, Dichlorotetramethyldisiloxan, α,ω-Dichloro-polydimethylsiloxan, Monoalkoxytrimethylsilan, hierbei insbesondere Monomethoxytrimethylsilan oder Monoethoxytrimethylsilan, Dialkoxy-dimethylsilan hierbei insbesondere Dimethoxydimethylsilan oder Diethoxy-dimethylsilan, α,ω-Dialkoxypolydimethylsiloxane, hierbei insbesondere α,ω-Dimethoxypolydimethylsiloxane oder α,ω-Diethoxypolydimethylsiloxane, Tetramethyldisiloxan, α,ω-Dihydrogenpolydimethylsiloxane, Divinyl-tetramethyldisiloxan oder α,ω-Divinylpolydimethylsiloxane, oder auch Mischungen vorgenannter Verbindungen, umfasst.

2. Verfahren gemäß Anspruch 1, wobei die D-Einheiten liefernde Verbindung mindestens ein Cyclosiloxan ausgewählt aus Hexamethylcyclotrisiloxan, Octamethylcyclotetrasiloxan, Decamethylcyclopentasiloxan und/oder Dodecamethylcylohexasiloxan und/oder ein unter Anspruch 2 genanntes, D-Gruppen enthaltendes Siloxan umfasst.

3. Verfahren gemäß Anspruch 1 oder 2, **dadurch gekennzeichnet, dass** die säurekatalysierte, lösemittelfreie Depolymerisation der Silikonabfälle in einem Reaktor erfolgt, dessen Volumen mindestens 5 Liter, insbesondere mindestens 10 Liter beträgt, und vorzugsweise maximal 500000 Liter beträgt.

4. Verfahren gemäß zumindest einem der Ansprüche 1 bis 3, **dadurch gekennzeichnet, dass** die säurekatalysierte, lösemittelfreie Depolymerisation der Silikonabfälle im Temperaturbereich von 30°C bis 150°C, bevorzugt im Temperaturbereich von 45°C bis 130°C durchgeführt wird, wobei im Falle der Verwendung der Endgruppen M^{R} liefernden Verbindung ausgewählt aus Tetramethyldisiloxan und/oder α,ω-Dihydrogenpolydimethyl-siloxanen, die säurekatalysierte, lösemittelfreie Depolymerisation besonders bevorzugt im Temperaturbereich von 35°C bis 80° durchgeführt wird.

5. Verfahren gemäß zumindest einem der Ansprüche 1 bis 4, **dadurch gekennzeichnet, dass** die Brönstedtsäure in Mengen von 0,05 bis 3 Gewichtsprozent, bevorzugt von 0,1 bis 1,0 Gewichtsprozent, besonders bevorzugt von 0,2 bis 0,8 Gewichtsprozent bezogen auf den gesamten Silikon-Anteil des Reaktionssystems eingesetzt wird.

6. Verfahren gemäß zumindest einem der Ansprüche 1 bis 5, **dadurch gekennzeichnet, dass** als Brönstedtsäuren
• Protonensäuren mit einem pK_{A}-Wert kleiner -1,30, wie vorzugsweise Salpetersäure, Methansulfonsäure und/oder p-Toluolsulfonsäure,
• vorzugsweise Protonensäuren mit einem pK_{A}-Wert kleiner -2,90 wie vorzugsweise konzentrierte Schwefelsäure,
• besonders bevorzugt Protonensäuren mit einem pK_{A}-Wert kleiner -4,90, wie vorzugsweise die Perfluoralkansulfonsäuren, wie Heptafluorpropansulfonsäure, Pentafluorethansulfonsäure und/oder Trifluormethansulfonsäure, Perchlorsäure und/oder Chlorsulfonsäure,
verwendet werden, wobei insbesondere Perfluoralkansulfonsäuren, am meisten bevorzugt Trifluormethansulfonsäure, präferiert werden, und/oder vorzugsweise sulfonsaure oder perfluoralkylsulfonsaure Ionenaustauscherharze eingesetzt werden.

7. Verfahren gemäß zumindest einem der Ansprüche 1 bis 6, **dadurch gekennzeichnet, dass** die säurekatalysierte, lösemittelfreie Depolymerisation der Silikonabfälle bei Normaldruck (1013 hPa) oder Überdruck, besonders bevorzugt aber bei Normaldruck durchgeführt wird.

8. Verfahren gemäß zumindest einem der Ansprüche 1 bis 7, **dadurch gekennzeichnet, dass** die Silikonabfälle Silikon-Kleb- und/oder Silikon-Dichtstoffe umfassen, vorzugsweise Silikon-Kleb- und/oder Silikon-Dichtstoff-Kartuschen betreffen, insbesondere Silikon-Kleb- und/oder Silikon-Dichtstoff-Reste in und/oder an Polyolefin-Behältnissen, vorzugsweise Polyethylen-Behältnissen, bevorzugt umfassend HDPE und/oder LDPE, betreffen.

9. Verfahren gemäß zumindest einem der Ansprüche 1 bis 8, **dadurch gekennzeichnet, dass** die resultierenden endverschlossenen, flüssigen Siloxane Alkoxysiloxane, Wasserstoffsiloxane, Chlorsiloxane, Polydimethylsiloxane und/oder Vinylsiloxane mit Kettenlängen größer 3 Siliziumatomen umfassen.

10. Verfahren gemäß zumindest einem der Ansprüche 1 bis 9 unter Verwertung Silikonkontaminierten Polyolefins, vorzugsweise Polyethylens, insbesondere Silikon-kontaminierter Polyethylen-Abfälle, zur Bereitstellung saurer Alkoxysiloxane, Wasserstoffsiloxane, Chlorsiloxane, Polydimethylsiloxane und/oder Vinylsiloxane mit Kettenlängen größer 3 Siliziumatomen unter im Wesentlichen sortenreiner Rückgewinnung von Polyolefin, vorzugsweise Polyethylen.

## Claims

1. Process for producing endcapped, liquid siloxanes having chain lengths of greater than 3 silicon atoms from silicone wastes, especially comprising silicone elastomers and/or silicone rubbers, by acid-catalysed depolymerization thereof in a solvent-free reaction system comprising
(i) at least one compound providing end groups M^{R},
(ii) at least one compound providing D units,
and
(iii) at least one Brønsted acid,
wherein the compound providing end groups M^{R} comprises hexamethyldisiloxane, polydimethylsiloxanes, poly(methylhydrogen)siloxane, poly(methylhydrogen)polydimethylsiloxane copolymer, trimethylchlorosilane, dimethyldichlorosilane, dichlorotetramethyldisiloxane, α,ω-dichloropolydimethylsiloxane, monoalkoxytrimethylsilane, in particular monomethoxytrimethylsilane or monoethoxytrimethylsilane, dialkoxydimethylsilane, in particular dimethoxydimethylsilane or diethoxydimethylsilane, α,ω-dialkoxypolydimethylsiloxanes, in particular α,ω-dimethoxypolydimethylsiloxanes or α,ω-diethoxypolydimethylsiloxanes, tetramethyldisiloxane, α,ω-dihydrogenpolydimethylsiloxanes, divinyltetramethyldisiloxane or α,ω-divinylpolydimethylsiloxanes or else mixtures of the abovementioned compounds.

2. Process according to Claim 1, wherein the compound providing D units comprises at least one cyclosiloxane selected from hexamethylcyclotrisiloxane, octamethylcyclotetrasiloxane, decamethylcyclopentasiloxane and/or dodecamethylcylohexasiloxane and/or a siloxane containing D groups recited in Claim 2.

3. Process according to Claim 1 or 2, **characterized in that** the acid-catalysed, solvent-free depolymerization of the silicone wastes is carried out in a reactor having a volume of at least 5 litres, in particular at least 10 litres, and preferably not more than 500 000 litres.

4. Process according to at least one of Claims 1 to 3, **characterized in that** the acid-catalysed, solvent-free depolymerization of the silicone wastes is performed in the temperature range of 30°C to 150°C, preferably in the temperature range of 45°C to 130°C, wherein when using the compound providing end groups M^{R} selected from tetramethyldisiloxane and/or α,ω-dihydrogenpolydimethylsiloxanes the acid-catalysed, solvent-free depolymerization is particularly preferably performed in the temperature range of 35°C to 80°C.

5. Process according to at least one of Claims 1 to 4, **characterized in that** the Brønsted acid is employed in amounts of 0.05 to 3 percent by weight, preferably of 0.1 to 1.0 percent by weight, particularly preferably of 0.2 to 0.8 percent by weight, based on the total silicone content of the reaction system.

6. Process according to at least one of Claims 1 to 5, **characterized in that** it employs as Brønsted acids
• protic acids having a pK_{A} of less than -1.30, such as preferably nitric acid, methanesulfonic acid and/or p-toluenesulfonic acid,
• preferably protic acids having a pK_{A} of less than - 2.90, such as preferably concentrated sulfuric acid,
• particularly preferably protic acids having a pK_{A} of less than -4.90, such as preferably perfluoroalkanesulfonic acids, such as heptafluoropropanesulfonic acid, pentafluoroethanesulfonic acid and/or trifluoromethanesulfonic acid, perchloric acid and/or chlorosulfonic acid,
wherein especially perfluoroalkanesulfonic acids, most preferably trifluoromethanesulfonic acid, are preferred and/or preferably sulfonic acid- or perfluoroalkylsulfonic acid-acidified ion-exchange resins are employed.

7. Process according to at least one of Claims 1 to 6, **characterized in that** the acid-catalysed, solvent-free depolymerization of the silicone wastes is performed at standard pressure (1013 hPa) or positive pressure but particularly preferably at standard pressure.

8. Process according to at least one of Claims 1 to 7, **characterized in that** the silicone wastes comprise silicone adhesives and/or silicone sealants, preferably silicone adhesive and/or silicone sealant cartridges, in particular silicone adhesive and/or silicone sealant residues in and/or on polyolefin containers, preferably polyethylene containers, preferably comprising HDPE and/or LDPE.

9. Process according to at least one of Claims 1 to 8, **characterized in that** the resulting endcapped, liquid siloxanes comprise alkoxysiloxanes, hydrogensiloxanes, chlorosiloxanes, polydimethylsiloxanes and/or vinylsiloxanes having chain lengths of greater than 3 silicon atoms.

10. Process according to at least one of Claims 1 to 9 utilizing silicone-contaminated polyolefin, preferably polyethylene, in particular silicone-contaminated polyethylene wastes, for providing acidic alkoxysiloxanes, hydrogensiloxanes, chlorosiloxanes, polydimethylsiloxanes and/or vinylsiloxanes having chain lengths of greater than 3 silicon atoms in the course of substantially single stream recovery of polyolefin, preferably polyethylene.

## Revendications

1. Procédé de préparation de siloxanes liquides à extrémités fermées, présentant des longueurs de chaîne supérieures à 3 atomes de silicium à partir de déchets de silicone, comprenant en particulier des élastomères de silicone et/ou des caoutchoucs de silicone, par leur dépolymérisation catalysée par un acide dans un système de réaction exempt de solvant, qui comprend
(i) au moins un composé fournissant des groupes terminaux M^{R},
(ii) au moins un composé fournissant des motifs D ainsi que
(iii) au moins un acide de Brönstedt,
le composé fournissant des groupes terminaux M^{R} comprenant l'hexaméthyldisiloxane, les polydiméthylsiloxanes, le poly(méthylhydrogéno)siloxane, un copolymère de poly(méthylhydrogéno)polydiméthylsiloxane, le triméthylchlorosilane, le diméthyldichlorosilane, le dichlorotétraméthyldisiloxane, l'α,ω-dichloro-polydiméthylsiloxane, le monoalcoxytriméthylsilane, en particulier le monométhoxytriméthylsilane ou le monoéthoxytriméthylsilane, le dialcoxy-diméthylsilane, en particulier le diméthoxydiméthylsilane ou le diéthoxy-diméthylsilane, les α,ω-dialcoxypolydiméthylsiloxanes, en particulier les α,ω-diméthoxypolydiméthylsiloxanes ou les α,ω-diéthoxypolydiméthylsiloxanes, le tétraméthyldisiloxane, les α,ω-dihydrogénopolydiméthylsiloxanes, le divinyl-tétraméthyldisiloxane ou les α,ω-divinylpolydiméthylsiloxanes ou également les mélanges des composés susmentionnés.

2. Procédé selon la revendication 1, le composé fournissant des motifs D comprenant au moins un cyclosiloxane choisi parmi l'hexaméthylcyclotrisiloxane, l'octaméthylcyclotétrasiloxane, le décaméthylcyclopentasiloxane et/ou le dodécaméthylcylohexasiloxane et/ou un siloxane contenant des groupes D mentionné dans la revendication 2.

3. Procédé selon la revendication 1 ou 2, **caractérisé en ce que** la dépolymérisation catalysée par un acide, exempte de solvant, des déchets de silicone a lieu dans un réacteur dont le volume est d'au moins 5 litres, en particulier d'au moins 10 litres et de préférence d'au maximum 500 000 litres.

4. Procédé selon au moins l'une des revendications 1 à 3, **caractérisé en ce que** la dépolymérisation catalysée par un acide, exempte de solvant, des déchets de silicone est réalisée dans la plage de température de 30 °C à 150 °C, de préférence dans la plage de température de 45 °C à 130 °C, dans lequel, dans le cas de l'utilisation du composé fournissant des groupes terminaux M^{R} choisi parmi le tétraméthyldisiloxane et/ou les α,ω-dihydrogénopolydiméthyl-siloxanes, la dépolymérisation catalysée par un acide, exempte de solvant, est de manière particulièrement préférée réalisée dans la plage de température de 35 °C à 80 °C.

5. Procédé selon au moins l'une des revendications 1 à 4, **caractérisé en ce que** l'acide de Brönstedt est utilisé en des quantités de 0,05 à 3 % en poids, de préférence de 0,1 à 1,0 % en poids, de manière particulièrement préférée de 0,2 à 0,8 % en poids, par rapport à la proportion totale de silicone du système de réaction.

6. Procédé selon au moins l'une des revendications 1 à 5, **caractérisé en ce qu'**on utilise, comme acides de Brönstedt,
• des acides protoniques présentant une valeur de pK_{A} inférieure à -1,30, tels que de préférence l'acide nitrique, l'acide méthanesulfonique et/ou l'acide p-toluènesulfonique,
• de préférence des acides protoniques présentant une valeur de pK_{A} inférieure à -2,90, tels que de préférence l'acide sulfurique concentré,
• de manière particulièrement préférée des acides protoniques présentant une valeur de pK_{A} inférieure à - 4,90, tels que de préférence les acides perfluoroalcanesulfoniques, tels que l'acide heptafluoropropanesulfonique, l'acide pentafluoroéthanesulfonique et/ou l'acide trifluorométhanesulfonique, l'acide perchlorique et/ou l'acide chlorosulfonique,
en préférant en particulier les acides perfluoroalcanesulfoniques, le plus préférablement l'acide trifluorométhanesulfonique et/ou en utilisant de préférence des résines échangeuses d'ions acide sulfonique ou acide perfluoroalkylsulfonique.

7. Procédé selon au moins l'une des revendications 1 à 6, **caractérisé en ce que** la dépolymérisation catalysée par un acide, exempte de solvant, des déchets de silicone est réalisée à la pression normale (1013 hPa) ou à une surpression, de manière particulièrement préférée cependant à la pression normale.

8. Procédé selon au moins l'une des revendications 1 à 7, **caractérisé en ce que** les déchets de silicone comprennent des adhésifs et/ou des matériaux d'étanchéité à base de silicone et concernent de préférence des cartouches d'adhésif et/ou de matériau d'étanchéité à base de silicone, en particulier des résidus d'adhésif et/ou de matériau d'étanchéité à base de silicone dans et/ou sur des récipients en polyoléfine, de préférence des récipients en polyéthylène, comprenant de préférence du HDPE et/ou du LDPE.

9. Procédé selon au moins l'une des revendications 1 à 8, **caractérisé en ce que** les siloxanes liquides, à extrémités fermées, obtenus comprennent des alcoxysiloxanes, des hydrogénosiloxanes, des chlorosiloxanes, des polydiméthylsiloxanes et/ou des vinylsiloxanes présentant des longueurs de chaîne supérieures à 3 atomes de carbone.

10. Procédé selon au moins l'une des revendications 1 à 9 utilisant une polyoléfine contaminée par de la silicone, de préférence du polyéthylène, en particulier des déchets de polyéthylène contaminés par de la silicone, pour la préparation d'alcoxysiloxanes, d'hydrogénosiloxanes, de chlorosiloxanes, de polydiméthylsiloxanes et/ou de vinylsiloxanes acides présentant des longueurs de chaîne supérieures à 3 atomes de silicium avec une récupération de polyoléfine, de préférence de polyéthylène, d'un type sensiblement pur.
